# EUROPÄISCHE PATENTANMELDUNG

(11) **EP 2 784 564 A1**
(43) Veröffentlichungstag der Anmeldung: **01.10.2014**
(21) Anmeldenummer: 14161303.4
(22) Anmeldetag: 24.03.2014
(51) Int. Cl.: G02B 21/00, G02B 27/58

(54) **Lichtmikroskop und Verfahren zum Untersuchen einer mikroskopischen Probe**

(30) Priorität: 28.03.2013 DE 102013005563
(71) Anmelder: Carl Zeiss Microscopy GmbH, 07745 Jena (DE)
(72) Erfinder: Kleppe, Ingo, 07743 Jena (DE); Novikau, Yauheni, 07743 Jena (DE); Nieten, Christoph, 07745 Jena (DE); Netz, Ralf, 07745 Jena (DE)
(74) Vertreter: Hampe, Holger

(57) **Zusammenfassung**

Die Erfindung betrifft ein Lichtmikroskop mit einer ersten Maske, welche voneinander getrennte Weiterleitungsbereiche aufweist zum gleichzeitigen Erzeugen mehrerer Beleuchtungslichtstrahlen aus Beleuchtungslicht, mit ersten Scanmitteln zum Erzeugen einer Scanbewegung der Beleuchtungslichtstrahlen und mit einer Probenhalterung. Das Lichtmikroskop ist erfindungsgemäß dadurch gekennzeichnet, dass eine zweite Maske mit voneinander getrennten Weiterleitungsbereichen vorhanden ist, welche zum Beschneiden der Beleuchtungslichtstrahlen kleiner sind als die Weiterleitungsbereiche der ersten Maske, dass durch die Scanbewegung der ersten Scanmittel jeder der Beleuchtungslichtstrahlen nacheinander auf verschiedene Weiterleitungsbereiche der zweiten Maske leitbar ist und dass zweite Scanmittel vorhanden sind zum Erzeugen einer Scanbewegung zwischen den beschnittenen Beleuchtungslichtstrahlen und der Probenhalterung. Außerdem betrifft die Erfindung ein entsprechendes Verfahren zum Untersuchen einer mikroskopischen Probe.

## Beschreibung

Die vorliegende Erfindung bezieht sich auf ein Lichtmikroskop nach dem Oberbegriff des Anspruchs 1. Zudem betrifft die Erfindung ein Verfahren zum Untersuchen einer mikroskopischen Probe nach dem Oberbegriff des Anspruchs 11.

Eine mikroskopische Probe kann ein beliebiges Objekt sein, das mit einem Lichtmikroskop untersucht werden kann.

Ein grundlegendes Ziel besteht darin, eine Probe mit möglichst hoher Auflösung untersuchen zu können. Es sind verschiedene Verfahren und Lichtmikroskope bekannt, mit denen eine höhere Auflösung als bei üblicher Weitfeldmikroskopie erreicht werden kann. Die bekannten Verfahren und Lichtmikroskope weisen aber verschiedene Nachteile auf. So wird oftmals nur ein geringer Anteil der verfügbaren Lichtmenge genutzt. Dadurch steigt die erforderliche Messzeit oder sinkt die erreichbare Bildqualität. Auch kann der apparative Aufwand unverhältnismäßig hoch sein. Bei anderen Verfahren muss wiederum eine sehr hohe Intensität des Beleuchtungslichts bereitgestellt werden.

Zur Auflösungssteigerung ist beispielsweise die Mikroskopie mit strukturierter Beleuchtung bekannt (SIM, englisch: structured illumination microscopy). Hierbei wird die Probe mit strukturiertem Beleuchtungslicht bestrahlt. Dieses wird oftmals durch eine Gitterabbildung erzeugt. Es werden mehrere Bilder mit verschiedenen Gitterausrichtungen und -perioden aufgenommen und anschließend zu einem Bild mit erhöhter Auflösung verrechnet. Diese Methode weist jedoch Nachteile auf, wenn sie bei dickeren Proben eingesetzt wird, beispielsweise bei Proben, die dicker als 30 µm sind. Dies liegt insbesondere an der unerwünschten Detektion von außerfokalem Licht. Außerdem ist nachteilig, dass aufgrund der verhältnismäßig hohen Anzahl an benötigten Bildaufnahmen der Zeitaufwand groß ist.

Weiterhin sind Laser-Scanning-Mikroskope (LSM) zur Erzeugung von Bildern hoher Auflösung bekannt. Bei diesen wird ein Lichtpunkt oder Beleuchtungsspot in der Probenebene erzeugt. Hiervon ausgehendes Probenlicht durchläuft zunächst eine Lochblende oder ein Pinhole, bevor es auf den Detektor gelangt. Durch die geringe Größe des Pinholes wird außerfokales Licht weitgehend blockiert. Dadurch wird eine Konfokalität erreicht, die besser ist als bei der Mikroskopie mit strukturierter Beleuchtung. Ein entscheidender Nachteil bekannter Laser-Scanning-Mikroskope ist jedoch ihr schlechtes Signal-zu-Rausch-Verhältnis. Dies resultiert daraus, dass im Vergleich zu Weitfeldtechniken jeder Pixel eines Detektors nur sehr kurz belichtet wird. Die Belichtungszeit pro Pixel kann bis zu sieben Größenordnungen kleiner sein als bei einer Weitfeldaufnahme. In der Praxis führt die Verkleinerung des Pinholes zu einer geringeren Menge nachweisbaren Lichts und daher zu keiner verbesserten Auflösung, oder einer bloß geringfügig verbesserten Auflösung. Aus diesem Grund muss oftmals mit einer besonders hohen Beleuchtungsintensität gearbeitet werden. Schließlich ist auch nachteilig, dass die Scan-Geschwindigkeit verhältnismäßig gering ist, so dass eine Bildaufnahme vergleichsweise lange dauert.

Gewisse Verbesserungen werden mit einem gattungsgemäßen Lichtmikroskop und einem gattungsgemäßen Verfahren erreicht. Das gattungsgemäße Lichtmikroskop umfasst eine erste Maske, welche voneinander getrennte Weiterleitungsbereiche aufweist zum gleichzeitigen Erzeugen mehrerer Beleuchtungslichtstrahlen aus Beleuchtungslicht, erste Scanmittel zum Erzeugen einer Scanbewegung der Beleuchtungslichtstrahlen und eine Probenhalterung zum Halten einer Probe.

Bei dem gattungsgemäßen Verfahren zum Untersuchen einer mikroskopischen Probe wird zunächst Beleuchtungslicht ausgesendet. Sodann werden aus dem Beleuchtungslicht durch voneinander getrennte Weiterleitungsbereiche einer ersten Maske gleichzeitig mehrere Beleuchtungslichtstrahlen erzeugt. Mit ersten Scanmitteln wird eine Scanbewegung der Beleuchtungslichtstrahlen erzeugt.

Ein solches Verfahren ist aus US 5,428,475 A bekannt.

Indem mehrere Beleuchtungslichtstrahlen, die getrennt zueinander verlaufen, gleichzeitig genutzt werden, können vorteilhafterweise mehrere voneinander beabstandete Probenbereiche gleichzeitig untersucht werden. Dadurch sinkt der Zeitbedarf der Bildaufnahme.

Unter der ersten Maske kann eine beliebige Einrichtung verstanden werden, welche aus einem auftreffenden Lichtstrahl, das heißt dem Beleuchtungslicht, mehrere voneinander beabstandete Beleuchtungslichtstrahlen erzeugen kann. Beispielsweise kann die Maske eine Lochblendenscheibe sein. Ihre Löcher stellen die vorgenannten Weiterleitungsbereiche dar. Indem das Beleuchtungslicht gleichzeitig auf mehrere Löcher der Lochblendenscheibe geleitet wird, können mehrere Beleuchtungslichtstrahlen erzeugt werden.

Die ersten Scanmittel können beispielsweise dazu gestaltet sein, die Lochblendenscheibe zu rotieren. Die Positionsänderung der Löcher der Lochblendenscheibe stellt eine Scanbewegung der Beleuchtungslichtstrahlen dar.

Allgemein können die ersten Scanmittel aber beliebig gestaltet sein, solange mit ihnen ein Verlauf der Beleuchtungslichtstrahlen hinter der ersten Maske variabel eingestellt werden kann.

Eine Methode, mit der bei einem Laser-Scanning-Mikroskop die Messauflösung weiter verbessert werden kann, geht zurück auf den Artikel "Super-resolution in Confocal Imaging" von Colin Sheppard et al., erschienen in Optik 80, No. 2, 53 (1988). Dabei wird ein Detektor mit einer Ortsauflösung von besser als 1 Airy verwendet. Nach der Bildaufnahme erfolgt eine Umsortierung und Verrechnung der Daten, womit ein Bild erhöhter Auflösung erzeugt werden kann. Daher wird diese Methode auch als Akkumulation verschobener Sub-Airy-Detektorwerte bezeichnet. Nähere Beschreibungen sind in DE 10 2010 049 627 A1 und in der Einleitung von DE 10 2012 023 024 gegeben.

Ein gattungsgemäßes Lichtmikroskop, bei dem diese Methode eingesetzt wird, ist in EP 2 520 965 A1 beschrieben. Es werden mehrere Probenbilder aufgenommen, zwischen denen die Beleuchtungsspots in der Probenebene um eine Strecke verschoben werden, die kleiner als 1 Airy sind.

Ein Airy ist über die ersten Nullstellen eines beugungsbegrenzten Beleuchtungsspots definiert. Es ist somit eine Ausdehnung eines Beugungsscheibchens in einer Bildebene, das auf einen Punkt in der Probenebene zurückgeht. Die Ausdehnung kann als Strecke zwischen den ersten Nullstellen des Beugungsscheibchens definiert sein, welches auch als Airy-Scheibe oder Airy-Disk bezeichnet wird. Die Größe des Airy hängt somit vom jeweiligen Lichtmikroskop und der Lichtwellenlänge ab. Die Airy-Disk kann einen Radius von 0,61 λ / NA aufweisen, wobei λ die Lichtwellenlänge ist und NA die numerische Apertur des Messsystems.

Mit den nacheinander erzeugten Beleuchtungsspots, die zueinander im Sub-Airy-Bereich verschoben sind, wird bei einem gattungsgemäßen Lichtmikroskop jeweils ein Probenbild aufgenommen. Bei Beleuchtungsverschiebungen im Sub-Airy-Bereich hängt es von der Position des Beleuchtungsspots in der Probenebene ab, welches Detektorelement von einer festen Probenposition hauptsächlich Probenlicht empfängt. Aus diesem Grund werden die nacheinander aufgenommenen Messdaten ein und desselben Detektorelements verschiedenen Probenpunkten zugeordnet. Dies wird auch als Umsortieren der aufgenommenen Bilddaten bezeichnet. Damit Verschiebungen im Sub-Airy-Bereich erfasst werden können, müssen die Detektorelemente jeweils kleiner als 1 Airy sein.

Für eine Verschiebung der Beleuchtungsspots im Sub-Airy-Bereich wird bei EP 2 520 965 A1 ein Scanspiegel oder eine kippbare Glasplatte zwischen der Lochblendenscheibe und der Probenebene eingesetzt. Durch die Drehung der Lochblendenscheibe und die folgenden Scanmittel würde zwar eine durchgängige Scanbewegung des Beleuchtungslichts erzeugt. Dennoch soll für jede Bildaufnahme nur ein möglichst punktförmiger Probenbereich beleuchtet werden und nicht ein größerer linienförmiger Bereich. Zu diesem Zweck wird das Beleuchtungslicht blitz- oder stroboskopartig auf die Lochblendenscheibe geleitet. Ein Kamerachip, mit dem Probenlicht aufgenommen wird, muss sehr oft ausgelesen werden, um zu vermeiden, dass die Messungen aufeinander folgender Beleuchtungsblitze einander stören.

Dadurch steigt der Zeitbedarf, der bei EP 2 520 965 A1 zur Erzeugung eines Bilds mit hoher Auflösung erforderlich ist.

Außerdem führt die in EP 2 520 965 A1 beschriebene Nutzung der Lochblendenscheibe zu nicht geringen Lichtverlusten. So sollten die Probenbereiche, die zu einem Zeitpunkt untersucht werden, möglichst klein sein. Zwar kann die Größe der beleuchteten Probenbereiche verringert werden, wenn die Größe der Weiterleitungsbereiche, das heißt der Pinholes der Lochblendenscheibe, reduziert wird. Hierdurch wird aber auch die nachweisbare Probenlichtmenge verringert. Daher ist die Auflösungsverbesserung deutlich eingeschränkt.

Als eine **Aufgabe** der Erfindung kann angesehen werden, ein Lichtmikroskop sowie ein Verfahren zum Untersuchen einer mikroskopischen Probe bereitzustellen, mit denen Bilder besonders hoher Auflösung bei geringem Zeitbedarf erzeugt werden können.

Diese Aufgabe wird durch das Lichtmikroskop mit den Merkmalen des Anspruchs 1 und durch das Verfahren mit den Merkmalen des Anspruchs 11 gelöst.

Vorteilhafte Varianten der erfindungsgemäßen Lichtmikroskops und des erfindungsgemäßen Verfahrens sind Gegenstand der abhängigen Ansprüche und werden außerdem in der folgenden Beschreibung erläutert.

Bei dem Lichtmikroskop der oben genannten Art ist erfindungsgemäß vorgesehen, dass eine zweite Maske mit voneinander getrennten Weiterleitungsbereichen vorhanden ist, welche zum Beschneiden der Beleuchtungslichtstrahlen kleiner sind als die Weiterleitungsbereiche der ersten Maske, dass durch die Scanbewegung der ersten Scanmittel jeder der Beleuchtungslichtstrahlen nacheinander auf verschiedene Weiterleitungsbereiche der zweiten Maske leitbar ist und dass zweite Scanmittel vorhanden sind zum Erzeugen einer Scanbewegung zwischen den beschnittenen Beleuchtungslichtstrahlen und der Probenhalterung.

Bei dem Verfahren der oben genannten Art ist erfindungsgemäß vorgesehen, dass mit Weiterfeitungsbereichen einer zweiten Maske die Beleuchtungslichtstrahlen beschnitten werden, wozu die Weiterleitungsbereiche der zweiten Maske kleiner sind als die Weiterleitungsbereiche der ersten Maske, dass durch die Scanbewegung der ersten Scanmittel jeder der Beleuchtungslichtstrahlen nacheinander auf verschiedene Weiterleitungsbereiche der zweiten Maske geleitet wird und dass mit zweiten Scanmitteln eine Scanbewegung zwischen den beschnittenen Beleuchtungslichtstrahlen und der Probe erzeugt wird.

Als ein wesentlicher Gedanke der Erfindung kann angesehen werden, dass die ersten Scanmittel keine kontinuierliche Scanbewegung der Beleuchtungslichtstrahlen in der Probenebene erzeugen. Vielmehr wird eine Scanbewegung über die zweite Maske bereitgestellt. Solange ein Beleuchtungslichtstrahl während dieser Scanbewegung der ersten Scanmittel auf denselben Weiterleitungsbereich der zweiten Maske trifft, führt diese Scanbewegung zu keiner Positionsänderung der beschnittenen Beleuchtungslichtstrahlen in der Probenebene, sofern die zweiten Scanmittel keine Scanbewegung ausführen. Dadurch wird während der Scanbewegung der ersten Scanmittel für eine bestimmte Zeit eine ortsfeste Beleuchtung in der Probenebene erreicht. Nach dieser Zeit treffen die Beleuchtungslichtstrahlen aufgrund der Scanbewegung der ersten Scanmittel nicht mehr auf Weiterleitungsbereiche und werden von der zweiten Maske auf dem Weg zur Probenebene blockiert. Nach einer weiteren Zeitdauer treffen die Beleuchtungslichtstrahlen auf andere Weiterleitungsbereiche der zweiten Maske. Indem andere Weiterleitungsbereiche der zweiten Maske beleuchtet werden, werden auch in der Probenebene andere Bereiche beleuchtet.

Dadurch ist es möglich, dass die ersten Scanmittel eine durchgängige Scanbewegung der Beleuchtungslichtstrahlen durchführen können. Weil diese Scanbewegung über die zweite Maske verläuft, werden in der Probenebene Beleuchtungspunkte und nicht etwa größere unerwünschte Beleuchtungslinien erzeugt.

Es ist nicht nötig, die Beleuchtungslichtstrahlen in kurzen Blitzen oder Pulsen in Richtung der Probe zu senden. Dies ist hingegen bei herkömmlichen Lichtmikroskopen und Verfahren wie die aus EP 2 520 965 A1 erforderlich. Dort kann keine Bildaufnahme erfolgen, während die ersten Scanmittel eine Scanbewegung der Beleuchtungslichtstrahlen ausführen.

Ein besonders wichtiger Vorteil der Erfindung resultiert daraus, dass jeder der Beleuchtungslichtstrahlen, der von einem der Weiterleitungsbereiche der ersten Maske ausgeht, nacheinander auf mehrere Weiterleitungsbereiche der zweiten Maske trifft und nicht etwa nur auf einen Weiterleitungsbereich der zweiten Maske. Dadurch wird die Anzahl an nacheinander erzeugten Beleuchtungsspots pro Zeiteinheit erhöht.

Beispielsweise werden bei EP 2 520 965 A1 zu einem ersten Zeitpunkt eine bestimmte Anzahl an Pinholes der Lochblendenscheibe, das heißt an Weiterleitungsbereichen der ersten Maske, mit einem Beleuchtungslichtpuls bestrahlt. Zu einem späteren Zeitpunkt, zu dem sich die Lochblendenscheibe gedreht hat, wird wieder ein Beleuchtungslichtpuls auf eine bestimmte Anzahl an Pinholes gesendet. Zwischen diesen beiden Zeitpunkten werden keine Beleuchtungsspots in der Probenebene erzeugt.

Im Gegensatz dazu werden in demselben Zeitraum bei der Erfindung mehrere Weiterleitungsbereiche der zweiten Maske nacheinander bestrahlt, womit mehrere Beleuchtungsspots in der Probenebene nacheinander erzeugt werden. Dadurch sinkt die erforderliche Messzeit.

Wichtig ist zudem, dass ein Kamerachip, mit dem Probenlicht aufgenommen wird, nicht jedes Mal ausgelesen werden muss, wenn das Muster an Beleuchtungsspots in der Probenebene geändert wird. Wird ein Beleuchtungslichtstrahl von der ersten Maske nacheinander über mehrere Weiterleitungsbereiche der zweiten Maske gescannt, so entstehen dadurch nacheinander Beleuchtungsspots in der Probenebene, die räumlich so weit voneinander getrennt sind, dass von diesen ausgehendes Probenlicht sich nicht oder nur kaum überlagert. Dadurch kann der Kamerachip Probenlicht zu nacheinander erzeugten Beleuchtungsspots integrieren, ohne dazwischen ausgelesen zu werden. Im Ergebnis muss damit der Kamerachip seltener ausgelesen werden, womit wiederum eine Zeitersparnis erreicht wird.

Die Auflösungssteigerung wird vorteilhafterweise lateral und axial erreicht, also nicht nur innerhalb der Probenebene, sondern auch in der Tiefenrichtung.

Allgemein können die Weiterleitungsbereiche der ersten und zweiten Maske dadurch definiert sein, dass sie im Gegensatz zu den übrigen Bereichen dieser Masken Beleuchtungslicht in Richtung der Probenebene weiterleiten. Beispielsweise kann Licht durch die Weiterleitungsbereiche transmittiert werden, während es von anderen Bereichen der zugehörigen Maske blockiert wird, insbesondere absorbiert, gestreut oder reflektiert wird. Alternativ können die Weiterleitungsbereiche auch Licht reflektieren, während von übrigen Bereichen der zugehörigen Maske Beleuchtungslicht nicht reflektiert wird oder jedenfalls in eine andere Richtung und somit nicht zur Probenebene reflektiert wird. Die Weiterleitungsbereiche der ersten Maske können gleich denen der zweiten Maske gebildet sein oder von diesen verschieden sein. Grundsätzlich kann auf die erste Maske auch Beleuchtungslicht geleitet werden, welches bereits in mehrere Teilstrahlen aufgespalten wurde. In diesem Fall erzeugen die Weiterleitungsbereiche der ersten Maske aus den mehreren Teilstrahlen die beschriebenen Beleuchtungslichtstrahlen. Bevorzugt wird aber genau ein aufgeweiteter Beleuchtungslichtstrahl auf die erste Maske geführt.

Die ersten und die zweiten Scanmittel können wiederum entweder gleich oder verschieden gebildet sein. Wichtig ist bloß, dass ein räumlicher Verlauf von Beleuchtungslichtstrahlen relativ zur Probe variabel einstellbar ist. Allgemein können die ersten und/oder zweiten Scanmittel dazu gestaltet sein, eine Position der ersten und/oder zweiten Maske zu ändern, beispielsweise mit Piezo-Aktoren, oder aber Licht, das heißt Beleuchtungs- und/oder Probenlicht, zwischen dieser Maske und der Probenebene veränderbar abzulenken.

Außerdem ist es möglich, eine Probenverschiebeeinrichtung vorzusehen. Mit dieser ist die Probenhalterung relativ zum Beleuchtungslicht motorisch verschiebbar. Auch dadurch kann eine Scanbewegung bereitgestellt werden. Diese Scanbewegung erfolgt relativ zu den beschnittenen Beleuchtungslichtstrahlen, die von der zweiten Maske ausgehen. Daher kann die Probenverschiebeeinrichtung zweite Scanmittel darzustellert.

Die Probenhalterung kann eine beliebige Halterung sein, insbesondere ein Mikroskoptisch oder eine Halterung für einen Mikroskoptisch, womit eine Probe oder ein Probengefäß gehalten werden kann. Die Probenverschiebeeinrichtung oder -einheit kann daher auch einen Motor zum Verfahren des Mikroskoptisches umfassen.

Die erste Maske kann beispielsweise eine erste Lochblendenscheibe aufweisen. Bei dieser sind die Weiterleitungsbereiche durch Löcher gebildet. Prinzipiell können an Stelle von Löchern auch lichtdurchlässige Elemente eingesetzt werden, beispielsweise planparallele Plättchen oder Sammellinsen. Hohe Scangeschwindigkeiten werden erreicht, wenn die ersten Scanmittel Stellmittel zur Positionsänderung der Lochblendenscheibe aufweisen. Bevorzugt wird die Lochblendenscheibe durch die Stellmittel rotiert. Die Weiterleitungsbereiche können dann in einer oder mehrerer Spiralen auf der Lochblendenscheibe angeordnet sein. Eine solche Scheibe wird auch als Nipkow-Disk bezeichnet.

Vorteilhafterweise kann ein herkömmliches Lichtmikroskop mit beispielsweise einer Nipkow-Scheibe leicht nachgerüstet werden. Hierzu müssen außer Steuerelektronik im Wesentlichen bloß die zweite Maske und zweite Scanmittel ergänzt werden.

Um möglichst viel Beleuchtungslicht durch die Löcher der Lochblendenscheibe zu leiten, kann die erste Maske vor der ersten Lochblendenscheibe eine Mikrolinsenscheibe umfassen. Die Mikrolinsen der Mikrolinsenscheibe stellen ebenfalls Weiterleitungsbereiche dar, welche aus auftreffendem Beleuchtungslicht mehrere Beleuchtungslichtstrahlen erzeugen. Damit jede Mikrolinse stets auf eines der Löcher ausgerichtet ist, sind die Mikrolinsenscheibe und die Lochblendenscheibe vorzugsweise starr miteinander gekoppelt und werden gemeinsam rotiert.

Prinzipiell können die ersten Scanmittel aber auch dazu gestaltet sein, an Stelle einer Rotation der Lochblendenscheibe und einer gegebenenfalls vorhandenen Mikrolinsenscheibe eine beliebige andere Verschiebung von diesen durchzuführen.

Auch können die ersten Scanmittel einen Scanspiegel oder andere Ablenkmittel umfassen, womit Beleuchtungslichtstrahlen, die von der ersten Maske kommen, variabel ablenkbar sind. In diesem Fall kann die erste Maske auch feststehend sein.

Die zweite Maske und ihre Weiterleitungsbereiche können so gebildet sein, wie zur ersten Maske beschrieben. Dabei unterscheiden sich die Weiterleitungsbereiche der zweiten Maske von denen der ersten Maske in ihrer Größe und Dichte, das heißt ihrem Abstand zueinander. Vorzugsweise ist jeder der Weiterleitungsbereiche der ersten Maske gleich groß oder größer als eine Airy-Scheibe. Es ist besonders bevorzugt, dass jeder der Weiterleitungsbereiche der zweiten Maske kleiner ist als eine Airy-Scheibe und insbesondere einen Durchmesser zwischen 0,2 und 0,5 Airy hat, vorzugsweise zwischen 0,3 und 0,4 Airy. Die beschnittenen Beleuchtungslichtstrahlen erzeugen dadurch Beleuchtungsspots in der Probenebene, deren Durchmesser kaum größer als 1 Airy ist und somit nah an dem kleinsten Beleuchtungsspot herankommen, der prinzipiell mit einem derartigen Lichtmikroskop erzeugt werden kann.

Ein Abstand benachbarter Weiterleitungsbereiche der zweiten Maske ist vorzugsweise kleiner als ein Abstand benachbarter Weiterleitungsbereiche der ersten Maske und vorzugsweise höchstens halb so groß. Werden die beiden Masken relativ zueinander verschoben, so können die Beleuchtungslichtstrahlen, die von der ersten Maske ausgehen, jeweils nacheinander zu mehreren Weiterleitungsbereichen der zweiten Maske geführt werden. Dadurch kann eine Probe schneller gescannt, das heißt abgetastet, werden.

Um unnötige Verluste des Probenlichts zu vermeiden, ist es besonders bevorzugt, dass Probenlicht zu der ersten Maske leitbar ist, ohne dabei von der zweiten Maske beschnitten zu werden. Die verhältnismäßig kleinen Weiterleitungsbereiche der zweiten Maske können somit zu kleinen Beleuchtungsspots in der Probenebene führen, ohne dabei Probenlicht auf dem Weg zu einer Detektionseinrichtung zu blockieren.

Ein Punkt der Probenebene wird nicht auf einen unendlich kleinen Punkt in einer Zwischenbildebene abgebildet, sondern auf die Größe einer Airy-Scheibe. Haben die Weiterleitungsbereiche der ersten Maske jeweils die Größe einer Airy-Scheibe, so wird vorteilhafterweise ein unnötiges Blockieren des Probenlichts vermieden. Ein gewünschtes Blockieren von außerfokalem Probenlicht wird erreicht, wenn diese Weiterleitungsbereiche nicht oder nur geringfügig größer als eine Airy-Scheibe sind.

Prinzipiell kann die zweite Maske im Strahlengang des Probenlichts oder in einem davon verschiedenen Strahlengang angeordnet sein. Im ersten Fall ist die zweite Maske vorzugsweise so gestaltet, dass sie außerhalb ihrer Weiterleitungsbereiche wellenlängenabhängig entweder Licht blockiert oder Licht zwischen der ersten Maske und der Probenebene weiterleitet, um auftreffende Beleuchtungslichtstrahlen zu beschneiden und auftreffendes Probenlicht unbeschnitten in Richtung der ersten Maske weiterzuleiten. Diese Variante ist geeignet, wenn das Probenlicht Fluoreszenz- oder Phosphoreszenzlicht ist und sich daher in der Wellenlänge vom Beleuchtungslicht unterscheidet. Die zweite Maske kann außerhalb ihrer Weiterleitungsbereiche eine Grenzwellenlänge zwischen Transmission und Reflexion haben, welche zwischen den Wellenlängen des Beleuchtungslichts und des Probenlichts liegt.

Alternativ kann mit Strahlteilern vermieden werden, dass Probenlicht zu der zweiten Maske gelangt und von dieser blockiert wird. So können als Strahlteiler ein erster Farbteiler und ein zweiter Farbteiler vorhanden und so angeordnet sein, dass sie Beleuchtungslichtstrahlen vom ersten Farbteiler zum zweiten Farbteifer über die zweite Maske leiten und dass sie Probenlicht vom zweiten Farbteiler zum ersten Farbteiler nicht über die zweite Maske leiten. Die beiden Farbteiler können wiederum eine Grenzwellenlänge zwischen Transmission und Reflexion haben, die zwischen den Wellenlängen des Beleuchtungslichts und des Probenlichts liegt.

Bewegen die zweiten Scanmittel die zweite Maske, so wird dadurch das Beleuchtungssehfeld, wie es von der ersten Maske und den ersten Scanmitteln bereitgestellt wird, nicht verändert. Lenken die zweiten Scanmittel hingegen Licht zwischen der zweiten Maske und der Probenebene variabel einstellbar ab, so wird dadurch das Beleuchtungssehfeld geringfügig in der Probenebene bewegt, beispielsweise in mehreren Schritten bis zu 1,5 Airy. Bei einer bevorzugten Ausgestaltung wird eine solche Bewegung kompensiert, wodurch aufwändigere Steuerungen und Auswertungen vermieden werden können. Dabei sind die zweiten Scanmittel so gestaltet, dass sie einerseits Licht zwischen der ersten und der zweiten Maske einstellbar ablenken und dass sie andererseits auch Licht zwischen der zweiten Maske und der Probenebene einstellbar ablenken. Dadurch verschieben die zweiten Scanmittel zunächst das Beleuchtungssehfeld, das von der ersten Maske und den ersten Scanmitteln erzeugt wird, und sorgen anschließend für eine weitere, kompensierende Verschiebung. Dazu können die zweiten Scanmittel beispielsweise zwei Spiegelflächen oder lichtbrechende Körper haben, welche in gleichen Winkeln gedreht werden. Beleuchtungslichtstrahlen laufen dann von der ersten Spiegelfläche über die zweite Maske zu der zweiten Spiegelffäche.

Damit ein Benutzer am Lichtmikroskop nur geringe Veränderungen vornehmen muss, um andere Mikroskopieverfahren durchzuführen, ist vorzugsweise eine Halterung zum lösbaren Halten der zweiten Maske vorhanden. Die zweite Maske kann sodann von Hand entfernt werden, um eine Aufnahme eines Weitfeldbildes zu ermöglichen. Zudem kann die zweite Maske durch ein oder mehrere Gitter ersetzt werden, um strukturiertes Beleuchtungslicht bereitzustellen.

An Stelle einer solchen Halterung kann auch ein Magazin vorhanden sein. Mit diesem ist auswählbar, ob die zweite Maske, ein Gitter oder kein optisches Element in den Strahlengang eingebracht wird.

Zweckmäßigerweise wird mit einer Detektionseinrichtung, beispielsweise einer Kameraeinrichtung wie einer CCD- oder CMOS-Kamera, Probenlicht aufgenommen, welches von einer Probe in der Probenebene kommt. Bei einer bevorzugten Verfahrensvariante integriert die Kameraeinrichtung empfangene Signale, während Beleuchtungslicht durchgängig auf die erste Maske gestrahlt wird und die ersten Scanmittel eine Scanbewegung der Beleuchtungslichtstrahlen erzeugen. Während der Integrationszeit der Kameraeinrichtung führt die Scanbewegung der ersten Scanmittel aufgrund der zweiten Maske dennoch nicht zu unerwünschten großen Beleuchtungslinien in der Probenebene.

Die erforderliche Zeit zur Untersuchung einer Probe kann reduziert werden, wenn ein Integrieren der empfangenen Signale der Kameraeinrichtung erst dann beendet wird und das in dieser Weise aufgenommene Bild ausgelesen wird, wenn jeder der Beleuchtungslichtstrahlen nacheinander auf mehrere Weiterleitungsbereiche der zweiten Maske geleitet worden ist. Dadurch wird vorteilhafterweise die Anzahl der Auslesevorgänge der Kameraeinrichtung reduziert. Eine Scanbewegung der zweiten Scanmittel erfolgt vorzugsweise zwischen Integrationszeiten der Kameraeinrichtung, nicht aber während die beschnittenen Beleuchtungslichtstrahlen auf die Probe geleitet werden und die Detektoreinrichtung empfangene Signale integriert.

Insbesondere in diesem Fall können die zweiten Scanmittel dazu ansteuerbar sein, zwischen zwei Bildaufnahmen der Kameraeinrichtung eine Scanbewegung auszuführen, bei welcher die beschnittenen Beleuchtungslichtstrahlen in der Probenebene um eine Strecke verschoben werden, die kleiner ist als 1 Airy, vorzugsweise kleiner als 1/4 Airy. Die Auslesezeit der Kameraeinrichtung kann in diesem Fall für die Scanbewegung der zweiten Scanmittel genutzt werden.

Die Scanbewegung der zweiten Scanmittel kann aber auch während einer Integrationszeit der Kameraeinrichtung so langsam erfolgen, dass während der Integrationszeit die beschnittenen Beleuchtungslichtstrahlen in der Probenebene um eine Strecke verschoben werden, die kleiner ist als 1 Airy, vorzugsweise kleiner als 1/4 Airy. Solch eine geringe Verschiebung wirkt sich kaum auf die erreichbare Messgenauigkeit aus.

Für die anschließende Berechnung des hochaufgelösten Bildes muss die durchgeführte Verschiebung von beispielsweise 1/4 Airy bekannt sein. Abhängig von den Scanmitteln kann aber die durchgeführte Verschiebung mit einer unbekannten Ungenauigkeit behaftet sein. In diesem Fall kann die tatsächlich durchgeführte Verschiebung an Hand der aufgenommenen Bilder berechnet werden. Dazu werden die Positionen von Probenlichtspots in einem ersten Bild mit denen in einem zweiten Bild verglichen. Die Verschiebung von Probenlichtspots zwischen diesen Bildern gibt die gesuchte Verschiebung von beispielsweise 1/4 Airy an.

Typischerweise kann der Abstand benachbarter Weiterleitungsbereiche der ersten Maske 5 bis 10 Airy betragen. Die Weiterleitungsbereiche der zweiten Maske liegen hingegen näher beieinander und sind beispielsweise 1,5 bis 4 Airy voneinander entfernt. Während einer Kameraintegrationszeit werden daher nicht etwa wenige Beleuchtungsspots im Abstand von 5 bis 10 Airy zueinander erzeugt, sondern eine größere Anzahl an Befeuchtungsspots, die 1,5 bis 4 Airy voneinander entfernt sind.

Gegenüber einer alleinigen Nutzung einer ersten Maske mit Weiterleitungsbereichen im Abstand von 6 Airy zueinander, kann durch eine zweite Maske mit Weiterleitungsbereichen im Abstand von 2 Airy zueinander eine größere Anzahl an Beleuchtungsspots pro Bildaufnahme erzeugt werden. Diese Anzahl ist pro lateraler Richtung 3 mal so groß, insgesamt also 9 mal so groß. Dadurch sinkt die Anzahl erforderlicher Bilder um den Faktor 9.

Diese Anzahl kann sogar weiter reduziert werden. So kann vorgesehen sein, dass während einer Integrationszeit der Detektionseinrichtung zunächst die erste Scanbewegung ausgeführt wird und die Beleuchtungslichtstrahlen jeweils über mehrere Weiterleitungsbereiche der zweiten Maske geführt werden. Sodann wird das Beleuchtungslicht ausgeschaltet oder vor Erreichen der Probe blockiert. Zudem wird eine Einstellung der zweiten Scanmittel geändert. Darauf wird wieder Beleuchtungslicht auf die Probe geleitet, wobei die erste Scanbewegung weiterhin oder erneut ausgeführt wird. Es kann vorgesehen sein, dass dieser Vorgang mit dem Verstellen der zweiten Scanmittel einmal oder mehrmals nacheinander erfolgt. Erst anschließend werden die integrierten Signale der Detektionseinrichtung ausgelesen. Dadurch können die erforderlichen Auslesevorgänge vorteilhafterweise reduziert werden. Dabei ist wichtig, dass die Beleuchtungsspots, die während einer Integrationszeit in der Probenebene nacheinander erzeugt werden, zueinander einen Abstand von mindestens 1 Airy haben.

Dieser Ablauf ist besonders bevorzugt, wenn die Abstände zwischen den Weiterleitungsbereichen der zweiten Maske verhältnismäßig groß sind, beispielsweise größer oder gleich 3 Airy. In diesem Fall können ein oder sogar zwei Beleuchtungsspots nacheinander zwischen den Beleuchtungsspots erzeugt werden, welche durch benachbarte Weiterleitungsbereiche der zweiten Maske bei einer bestimmten Einstellung der zweiten Scanmittel erzeugt werden.

Weitere Vorteile und Merkmale der Erfindung werden nachstehend mit Bezug auf die beigefügten schematischen Figuren beschrieben.
- Fig. 1: zeigt ein Ausführungsbeispiel eines erfindungsgemäßen Lichtmikroskops.
- Fig. 2: zeigt vergrößert einen Ausschnitt des Lichtmikroskops aus Fig.1.
- Fig. 3: zeigt ein Graphen mit dem räumlichen Intensitätsverlauf von Beleuchtungslicht.
- Fig. 4: zeigt ein Graphen mit dem räumlichen Intensitätsverlauf von Probenlicht.
- Fig. 5: zeigt vergrößert einen Ausschnitt von Komponenten des Lichtmikroskops aus Fig. 1.
- Fig. 6: zeigt ein zweites Ausführungsbeispiel eines erfindungsgemäßen Lichtmikroskops.
- Fig. 7: zeigt ein drittes Ausführungsbeispiel eines erfindungsgemäßen Lichtmikroskops.
- Fig. 8: zeigt ein viertes Ausführungsbeispiel eines erfindungsgemäßen Lichtmikroskops.

Gleiche und gleich wirkende Bestandteile sind in den Figuren in der Regel mit denselben Bezugszeichen versehen.

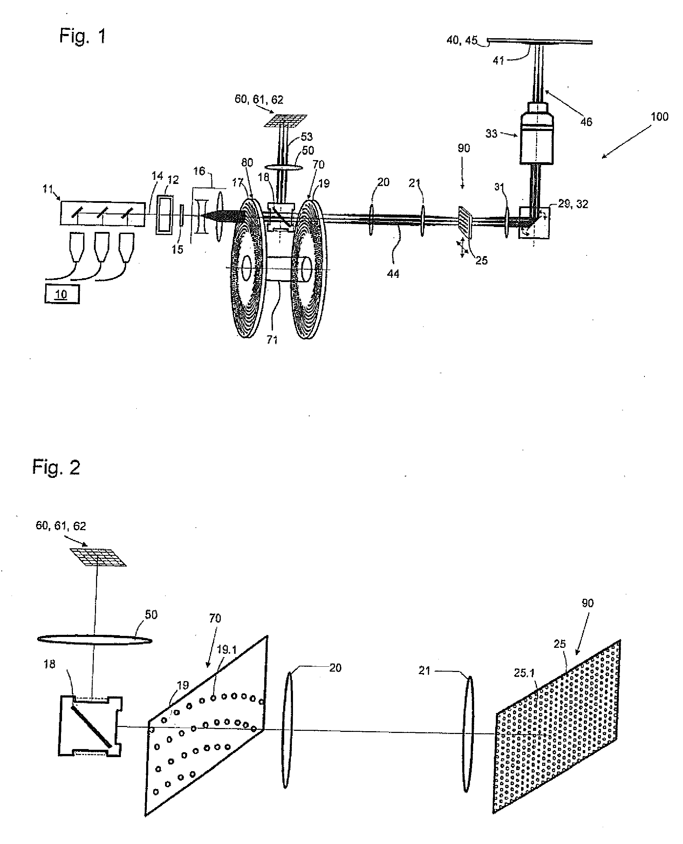

Ein erstes Ausführungsbeispiel eines erfindungsgemäßen Lichtmikroskops 100 ist schematisch in Figur 1 dargestellt. Als wesentliche Komponenten sind eine erste und eine zweite Maske 19, 25 sowie erste und zweite Scanmittel 71, 29 vorhanden.

Zunächst wird von einer Lichtquelle 10 Beleuchtungslicht 14 ausgesandt. Im dargestellten Beispiel umfasst die Lichtquelle 10 mehrere Lasermodule, deren Strahlengänge über optische Fasern und eine Spiegeltreppe 11 auf einen gemeinsamen Strahlengang vereint werden. Das Beleuchtungslicht 14 durchläuft einen akustooptischen durchstimmbaren Filter (AOTF) 12, eine Lambda/4-Platte 15 und ein Teleskop zur Strahlaufweitung 16.

Sodann trifft das Beleuchtungslicht 14 auf eine erste Maske, welche hier durch eine Mikrolinsenscheibe 17 und eine Lochblendenscheibe 19 gebildet ist. Auf der Mikrolinsenscheibe 17 sind mehrere Fokussierlinsen in einer oder in mehreren Spiralen angeordnet. Die Lochblendenscheibe 19 weist Löcher auf, die ebenfalls in einer oder mehrerer Spiralen angeordnet sind. Die Mikrolinsenscheibe 17 und die Lochblendenscheibe 19 sind starr miteinander gekoppelt und so gestaltet, dass jede Mikrolinse einen Beleuchtungslichtstrahl auf ein zugehöriges Loch fokussiert.

Indem das Beleuchtungslicht 14 gleichzeitig auf mehrere voneinander beabstandete Mikrolinsen geleitet wird, erzeugt jede der bestrahlten Mikrolinsen einen Beleuchtungslichtstrahl 44. Die Beleuchtungslichtstrahlen 44 werden abhängig von der Größder Löcher der Lochblendenscheibe 19 nochmals beschnitten. Die Mikrolinsen und die Löcher der Lochblendenscheibe 19 stellen somit Weiterleitungsbereiche dar, welche mehrere Beleuchtungslichtstrahlen 44 erzeugen können.

Grundsätzlich kann auch auf die Mikrolinsenscheibe 17 verzichtet werden. Durch ihre fokussierende Wirkung kann aber vorteilhafterweise erreicht werden, dass ein größerer Anteil des Beleuchtungslichts 14 die Löcher der Lochblendenscheibe 19 passiert.

Um nacheinander verschiedene Probenbereiche beleuchten zu können, werden die Mikrolinsenscheiben 17 und die Lochblendenscheibe 19 durch Antriebsmittel 71 um eine gemeinsame Achse rotiert. Diese Antriebsmittel 71 stellen erste Scanmittel 71 dar, welche eine Scanbewegung der Beleuchtungslichtstrahlen 44 erzeugen.

Die Beleuchtungslichtstrahlen 44 werden über Optiken 20 und 21 zu einer zweiten Maske 25 geführt. Diese umfasst mehrere voneinander getrennte Weiterleitungsbereiche, in denen Beleuchtungslichtstrahlen 44 in Richtung einer Probenebene 40 transmittiert werden können. Außerhalb der Weiterleitungsbereiche blockiert die Maske 25 auftreffende Beleuchtungslichtstrahlen 44. Die Größe der Weiterleitungsbereiche der zweiten Maske 25 ist so gewählt, dass alle Beleuchtungslichtstrahlen 44 beschnitten werden, ihr Querschnitt also reduziert wird. Die nähere Zusammenwirkung der ersten und zweiten Maske 19, 25 wird im Späteren genauer beschrieben.

Die von der zweiten Maske 25 beschnittenen Beleuchtungslichtstrahlen 46 werden über eine Optik 31 auf einen Scanner 29 geleitet. Dieser befindet sich in einer Pupillenebene und kann eine Ablenkrichtung der beschnittenen Beleuchtungslichtstrahlen 46 variabel einstellen. Dadurch kann der Scanner 29, der auch als zweites Scanmittel 29 bezeichnet werden kann, eine Scanbewegung der beschnittenen Beleuchtungslichtstrahlen 46 in der Probenebene 40 ausführen. Der Scanner 29 kann beispielsweise als Galvanometer-Scanner oder als MEMS-Scanner (mikroelektromechanischer Scanner) gebildet sein.

Anstelle eines Scanners 29 kann auch ein feststehender Spiegel 32 eingesetzt werden. Eine Scanbewegung kann dann dadurch bereitgestellt werden, dass eine Probenhalterung 45 durch eine Proben-Verschiebeeinheit relativ zu den beschnittenen Beleuchtungslichtstrahlen 46 verschiebbar ist.

Auch können als zweites Scanmittel Stellmittel zur Positionsänderung der zweiten Maske 25 vorhanden sind. Die Stellmittel können die Maske 25 beispielsweise in Richtung der beiden dargestellten Doppelpfeile verschieben.

Die beschnittenen Beleuchtungslichtstrahlen 46 werden schließlich mit einem Objektiv 33 in die Probenebene 40 fokussiert. In dieser kann eine Probe 41 angeordnet werden, welche auch mit einer Proben-Verschiebeeinheit 45 verrückt werden kann.

Die beschnittenen Beleuchtungslichtstrahlen 46 erzeugen in der Probenebene 40 voneinander beabstandete Beleuchtungsflecken oder -spots. Durch die geringe Größe der Weiterleitungsbereiche der zweiten Maske 25 sind die Beleuchtungsspots vorteilhafterweise besonders klein. Die kleinstmöglichen Beleuchtungsspots, die mit einem Lichtmikroskop erzeugt werden können, haben die Größe einer Airy-Scheibe. Geht Beleuchtungslicht von einem unendlich kleinen Punkt in einer Zwischenbildebene aus, so kann das Beleuchtungslicht nicht auf einen unendlich kleinen Punkt in der Probenebene 40 abgebildet werden. Vielmehr wird es beugungsbegrenzt abgebildet. Dadurch wird ein Punkt einer Zwischenbildebene auf einen ausgedehnten Bereich in der Probenebene 40 abgebildet. Dieser ausgedehnte Bereich kann als Airy-Scheibe bezeichnet werden.

Die Lochblendenscheibe 19 und die zweite Maske 25 sind jeweils in einer Zwischenbildebene 70, 90 angeordnet. Die Weiterleitungsbereiche der zweiten Maske 25 sind jeweils kleiner als eine Airy-Scheibe. Beispielsweise können sie einen Durchmesser zwischen 0,3 und 0,5 Airy haben. Dadurch werden Beleuchtungsspots in der Probenebene 40 erzeugt, welche vorteilhafterweise bloß Abmessungen von etwa 1 Airy haben. Durch diese kleinen Beleuchtungsspots kann prinzipiell eine hohe Messauflösung erreicht werden. Hierfür ist aber auch relevant, dass ein möglichst hoher Anteil des ausgestrahlten Probenlichts 53 nachgewiesen wird.

Unter Probenlicht 53 wird von der Probe 41 ausgestrahltes Licht verstanden, wobei es sich beispielsweise Fluoreszenz- oder Phosphoreszenzlicht handeln kann. Dieses wird zunächst über das Objektiv 33, den Scanner 29 oder den Spiegel 32 und die Optik 31 geleitet.

Bei der Ausführung von Fig. 1 verläuft das Probenlicht 53 sodann durch die zweite Maske 25. Würde die zweite Maske 25 auf Beleuchtungslichtstrahlen 44 und Probenlicht 53 in gleicher Weise wirken, ginge ein großer Anteil des Probenlichts 53 verloren. Dies würde sich nachteilig auf das Signal-zu-Rausch-Verhältnis oder eine erreichbare Messauflösung auswirken. Daher ist es wichtig, dass die zweite Maske 25 das Probenlicht 53 nicht beschneidet. Dies wird im Späteren näher beschrieben.

Das Probenlicht 53 wird weiter über die Optiken 21 und 20 zu der Lochblendenscheibe 19 geführt. Durch die Löcher und die sie umgebenden blockierenden Bereiche der Lochblendenscheibe 19 werden Teile des Probenlichts 53 blockiert. Ein Punkt der Probenebene 40 wird in der Zwischenbildebene 70, in welcher sich die Lochblendenscheibe 19 befindet, auf einen ausgedehnten Bereich mit der Größe einer Airy-Scheibe abgebildet. Um möglichst das gesamte Probenlicht weiterzuleiten, das von einem einzigen Punkt in der Probenebene 40 ausgeht, sollten die Löcher der Lochblendenscheibe 19 nicht kleiner als 1 Airy sein.

Hingegen soll Probenlicht, das aus einem anderen Bereich der Probenebene 40 oder nicht aus der Probenebene 40 stammt, möglichst weitgehend blockiert werden. Die Löcher der Lochblendenscheibe 19 sollten daher nicht unnötig groß sein. Deshalb haben die Löcher vorzugsweise einen Durchmesser von 1 Airy oder jedenfalls einen Durchmesser zwischen 0,8 und 1,2 Airy.

Nach Durchlaufen der Lochblendenscheibe 19 trifft das Probenlicht 53 auf einen Strahlteiler 18. Dieser kann beispielsweise ein Farbteiler sein, dessen Grenzwellenlänge zwischen Reflexion und Transmission zwischen den Wellenlängen des Beleuchtungslichts und des Probenlichts liegt. Dadurch leitet der Farbteiler 18 Probenlicht 53 nicht zur Mikrolinsenscheibe 17 weiter, sondern über eine Optik 50 zu einer Detektionseinrichtung 60. Diese befindet sich in einer Bildebene 62 und umfasst mehrere Detektorelemente 61, welche beispielsweise durch einen 2D-Kamerachip gebildet sein können.

Die Detektorelemente 61 sind jeweils kleiner als eine Airy-Scheibe und haben vorzugsweise einen Durchmesser von weniger als 0,5 Airy. Jeder Probenpunkt wird dadurch auf mehrere Detektorelemente 61 abgebildet. Dennoch kann durch diese geringe Größe der Detektorelemente 61 eine Auflösungssteigerung erreicht werden, wie oben näher beschrieben.

Das Zusammenwirken der ersten und zweiten Maske 19, 25 wird nun mit Bezug auf Fig. 2 erläutert. Diese zeigt vergrößert einen Ausschnitt aus Fig. 1. Die erste Maske 19 oder Lochblendenscheibe 19 ist nur ausschnittsweise dargestellt. Sie umfasst mehrere Löcher 19.1, welche spiralförmig angeordnet sind.

Die zweite Maske 25 umfasst ebenfalls mehrere lichtdurchlässige Bereiche 25.1 als Weiterleitungsbereiche. Es ist erkennbar, dass die Weiterleitungsbereiche 25.1 der zweiten Maske 25 kleiner sind als die der Lochblendenscheibe 19 und außerdem eine höhere Dichte haben. Durch die Rotation der Lochblendenscheibe 19 wird jeder Beleuchtungslichtstrahl nacheinander auf verschiedene Weiterleitungsbereiche 25.1 der zweiten Maske 25 geleitet. Dadurch werden in der Probenebene mit jedem Beleuchtungslichtstrahl nacheinander Beleuchtungsspots erzeugt, deren Positionen durch die Positionen der Weiterleitungsbereiche der zweiten Maske 25 bestimmt sind. Die Beleuchtungsmuster, die so in der Probenebene erzeugt werden, können als statisch oder quasi-stehend bezeichnet werden.

Jedes der Detektorelemente 61 kann empfangene Signale integrieren, während mit den Beleuchtungslichtstrahlen der Lochblendenscheibe 19 eine Scanbewegung über die zweite Maske 25 durchgeführt wird. Vorteilhafterweise kann daher ein und dieselbe Integrationszeitspanne einer Detektionseinrichtung 60 genutzt werden, um nacheinander mit verschiedenen Weiterleitungsbereichen der zweiten Maske 25 Beleuchtungsspots in der Probenebene zu erzeugen. Erst nach dieser Integrationszeitspanne wird das integrierte Signal des Detektorelements 61 ausgelesen. Die Anzahl der erforderlichen Auslesevorgänge kann somit reduziert werden.

Diese Anordnung bietet Vorteile gegenüber der Ausführung, die in EP 2 520 965 A1 beschrieben ist. Dort wird eine Lochblendenscheibe rotiert, welche der Lochblendenscheibe 19 entspricht. Es wird aber keine zweite Maske 25 genutzt. Erst durch diese werden aber quasi-stehende Beleuchtungsspots nacheinander in der Probenebene erzeugt, welche einen besonders geringen Abstand zueinander haben.

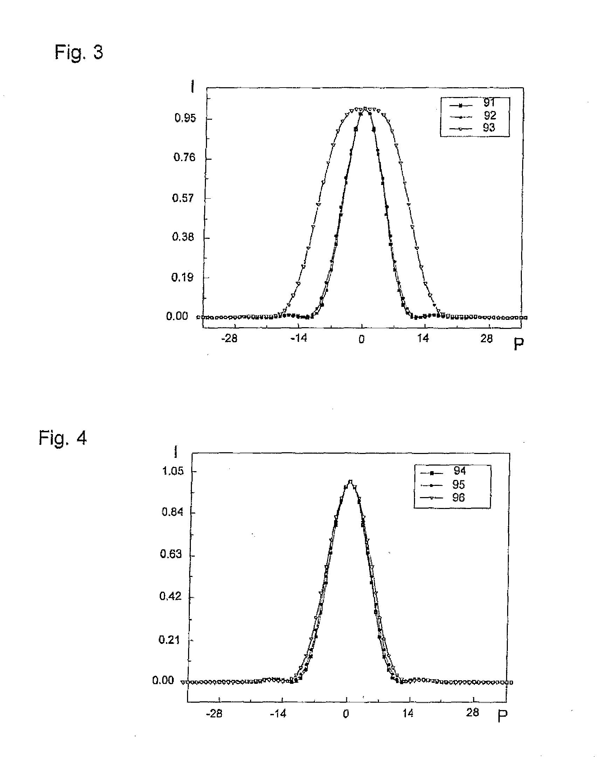

Vorteilhafterweise haben die Beleuchtungsspots aufgrund der kleinen Weiterleitungsbereiche 25.1 der zweiten Maske 25 zudem besonders kleine Abmessungen. Dies wird näher mit Bezug auf Fig. 3 beschrieben. In dieser ist eine Lichtintensität I in willkürlichen Einheiten gegen eine Position P in der Probenebene in willkürlichen Einheiten dargestellt. Eine Kurve 91 stellt die PSF des Lichtmikroskops dar, das heißt die Punktbild-Verwachsungsfunktion oder Punkt-Spreizfunktion (englisch: point spread function). Diese gibt den Intensitätsverlauf eines kleinstmöglichen Beleuchtungsspots an, der mit dem Mikroskop in der Probenebene erzeugt werden kann, wenn in einer Zwischenbildebene eine punktförmige Lichtquelle vorhanden wäre.

Die Kurve 92 gibt die Intensität eines Beleuchtungsspots in der Probenebene an, wenn ein Weiterleitungsbereich 25.1 der zweiten Maske 25 mit einem Durchmesser von 0,4 Airy genutzt wird.

Bei der Kurve 93 wird im Unterschied zur Kurve 92 ein Weiterleitungsbereich 25.1 mit einem Durchmesser von 1,0 Airy verwendet.

Es ist in Fig. 3 erkennbar, dass der Beleuchtungsspot der Kurve 93 erheblich größer als die PSF der Kurve 91 ist. Hingegen ist der Beleuchtungsspot der Kurve 92 nur geringfügig größer als die PSF, die durch die Kurve 91 angegeben ist. Um möglichst kleine Beleuchtungsspots in der Probenebene erzeugen zu können, liegen die Abmessungen der Weiterleitungsbereiche 25.1 daher vorzugsweise zwischen 0,3 und 0,5 Airy, besonders bevorzugt bei 0,4 Airy.

Von einem beleuchteten Punkt in der Probenebene kann Probenlicht ausgehen. Dieser Punkt wird in den Zwischenbildebenen 70 und 90 auf einen Bereich abgebildet, dessen Durchmesser zumindest 1 Airy beträgt. Aus diesem Grund sollen mit der Maske 25, deren Weiterleitungsbereiche 25.1 kleiner als 1 Airy sind, allein Beleuchtungslichtstrahlen beschnitten werden, nicht aber das Probenlicht.

In Fig. 4 ist wiederum die Intensität von Licht in willkürlichen Einheiten gegen eine Position P in der Bildebene 62 dargestellt.

Die Kurve 94 stellt die PSF für das Probenlicht dar. Damit wird der Intensitätsverlauf des kleinstmöglichen Lichtflecks dargestellt, der mit Probenlicht auf der Detektionseinrichtung erzeugt werden kann. Haben die Löcher 19.1 der Lochblendenscheibe 19 Abmessungen von höchstens 1,0 Airy, so können grundsätzlich Lichtflecken auf der Detektionseinrichtung erzeugt werden, deren Abmessungen denen der PSF 94 entsprechen. Dabei ist jedoch zu berücksichtigen, dass das Probenlicht an den Rändern der Löcher 19.1 Beugungseffekte erfährt. Nach Durchlaufen der Löcher 19.1 ist das Probenlicht daher geringfügig aufgeweitet. Um möglichst das gesamte Probenlicht weiter zur Detektionseinrichtung zu führen, muss daher die in Fig. 2 dargestellte Optik 50, welche zwischen der Lochblendenscheibe 19 und der Detektionseinrichtung 60 angeordnet ist, eine größere numerische Apertur als die Optik 20 aufweisen, welche vom Probenlicht vor der Lochblendenscheibe 19 durchlaufen wird. Beispielsweise kann die numerische Apertur der Optik 50 1,3 mal so groß sein wie die numerische Apertur der Optik 20. In diesem Fall kann ein Lichtfleck gemäß der Kurve 95 aus Fig. 4 auf der Detektionseinrichtung erzeugt werden. Die Kurve 95 ist weitgehend identisch zur PSF 94.

Die Kurve 96 zeigt hingegen den kleinstmöglichen Lichtfleck auf der Detektionseinrichtung, wenn die numerische Apertur der Optik 50 gleich der numerischen Apertur der Optik 20 ist. Es ist erkennbar, dass die Kurve 96 unerwünscht breiter ist als die Kurve 94.

Würde das Probenlicht durch die kleinen Weiterleitungsbereiche 25.1 der zweiten Maske 25 beschnitten, so würde die Breite eines erzeugbaren Lichtflecks auf der Detektionseinrichtung nach wie vor weitgehend den Breiten der Kurven 95 und 96 entsprechen. Die Intensität des Beleuchtungsflecks wäre aber niedriger als die der Kurven 95 und 96.

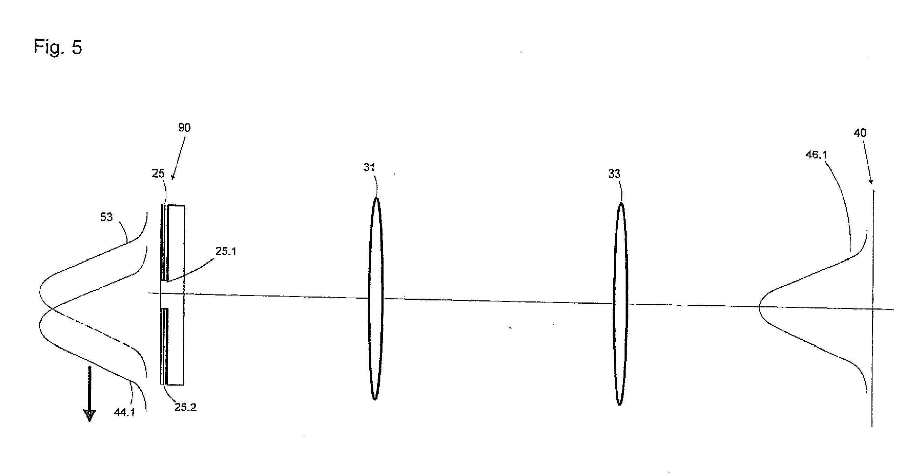

Daher soll die zweite Maske 25 das Probenlicht nicht beschneiden. Eine Ausführungsform, in der dies erreicht wird, wird mit Bezug auf Fig. 5 beschrieben. Diese zeigt schematisch einen Ausschnitt der zweiten Maske 25 sowie die Optik 31 und das Objektiv 33.

Die Maske 25 umfasst einen transparenten Träger, der mit einem dichroitischen Schichtsystem 25.2 beschichtet ist. Die Weiterleitungsbereiche 25.1 sind durch Bereiche des Trägers gebildet, welche nicht mit dem Schichtsystem 25.2 versehen sind. Das Schichtsystem 25.2 blockiert Beleuchtungslicht, lässt aber Probenlicht hindurch.

Ein Beleuchtungslichtstrahl 44.1, der nicht zentriert auf einen Weiterleitungsbereich 25.1 trifft, wird dadurch gefiltert. Der in dieser Weise beschnittene Beleuchtungslichtstrahl erzeugt in der Probenebene 40 einen Beleuchtungsspot 46.1, welcher zu dem Weiterleitungsbereich 25.1 ausgerichtet ist.

Dargestellt ist schließlich auch ein Intensitätsverlauf von Probenlicht 53, das von einem zentral beleuchteten Punkt in der Probenebene 40 ausgeht und durch die beschichteten Bereiche 25.2 nicht blockiert wird.

Eine solche Maske 25 kann bei dem Ausführungsbeispiel von Fig. 1 eingesetzt werden. Hierbei können jedoch Beugungseffekte nachteilig sein, welche Probenlicht an den Kanten zwischen den Weiterleitungsbereichen 25.1 und den beschichteten Bereichen 25.2 erfährt.

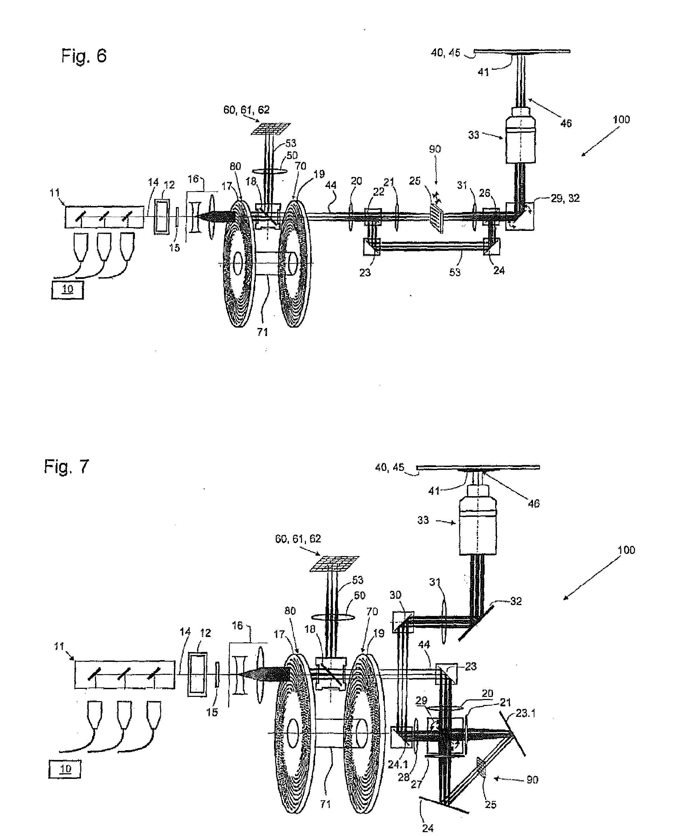

Diese Effekte können bei der in Fig. 6 dargestellten Ausführungsform vermieden werden. Im Unterschied zur Ausführung von Fig. 1 durchläuft hier das Probenlicht 53 nicht die zweite Maske 25. Dazu wird jeweils ein Strahlteiler 22, 26 vor und hinter der zweiten Maske 25 eingesetzt. Die Strahlteiler 22, 26 können beispielsweise Farbteiler sein, mit denen Beleuchtungslichtstrahlen 44 über die zweite Maske 25 geleitet werden und Probenlicht 53 über einen anderen Strahlengang geleitet wird. Dieser andere Strahlengang wird mit den Spiegeln 23 und 24 gebildet.

In diesem Fall muss die Maske 25 nicht mit einem aufwändigen Schichtsystem gebildet sein. Stattdessen kann beispielsweise eine lichtblockierende Metallschicht auf einem Glassubstrat verwendet werden.

Ein weiteres Ausführungsbeispiel eines erfindungsgemäßen Lichtmikroskops 100 ist schematisch in Fig. 7 gezeigt. Dieses unterscheidet sich von den Ausführungen der Figuren 1 und 6 insbesondere durch die Art der zweiten Scanmittel 29.

Die zweiten Scanmittel 29 umfassen hier zwei Spiegelflächen, welche zum Erzeugen einer Scanbewegung drehbar sind. Die beiden Spiegelflächen werden gemeinsam in gleichen Winkeln bewegt und können insbesondere als Vorder- und Rückseite eines Körpers gebildet sein. Dies wird auch als Rescan bezeichnet.

Beleuchtungslichtstrahlen 44, die von der Lochblendenscheibe 19 kommen, werden zunächst über einen Spiegel 23 und eine Optik 20 auf die erste Spiegelfläche der zweiten Scanmittel 29 geleitet. Von diesen werden sie einstellbar abgelenkt und über eine Optik 21 und einen Spiegel 23.1 auf die zweite Maske 25 geführt. Die zweite Maske 25 kann hier ortsfest sein. Die von der zweiten Maske 25 beschnittenen Beleuchtungslichtstrahlen 46 werden über einen Spiegel 24 und eine Optik 27 auf die zweite Spiegelfläche der zweiten Scanmittel 29 geführt. Durch die Ablenkung an der zweiten Spiegelfläche wird die Ablenkung an der ersten Spiegelfläche gerade kompensiert. Das Beleuchtungssehfeld und damit das Sichtfeld der Detektionseinrichtung 60 ist daher unabhängig von der Scanbewegung der zweiten Scanmittel 29. Das heißt, würden die Beleuchtungslichtstrahlen durch die zweite Maske 25 nicht beschnitten, wäre ihr räumlicher Verlauf hinter der zweiten Spiegelfläche unabhängig von der Scanbewegung der zweiten Scanmittel 29. Wegen des Beschnitts durch die zweite Maske 25 führt die Scanbewegung der zweiten Scanmittel 29 dazu, dass variabel einstellbar ist, welcher Querschnittsbereich der Beleuchtungslichtstrahlen 44 durch die zweite Maske 25 beschnitten wird.

Von der zweiten Spiegelfläche werden die beschnittenen Beleuchtungslichtstrahlen schließlich über eine Optik 28, einen Spiegel 24.1, einen Spiegel 30, eine Optik 31, einen Spiegel 32 und ein Objektiv 33 in die Probenebene 40 geführt.

Probenlicht 53 wird diesen Weg zurückgeleitet und läuft insbesondere ebenfalls über die zweite Spiegelfläche des zweiten Scanmittels 29, die zweite Maske 25 und die erste Spiegelfläche der zweiten Scanmittel 29 zu der Lochblendenscheibe 19.

Indem das Probenlicht 53 über den beschriebenen Rescan zur Detektionseinrichtung 60 geleitet wird, ist der Probenebenenausschnitt, aus dem die Detektionseinrichtung 60 Probenlicht 53 empfangen kann, vorteilhafterweise unabhängig von einer Stellung der zweiten Scanmittel 29. In anderen Worten ist die Detektions-PSF unabhängig von der Stellung der zweiten Scanmittel 29.

Grundsätzlich kann ein hochaufgelöstes Bild aber auch berechnet werden, wenn die Detektions-PSF abhängig von der Stellung der zweiten Scanmittel 29 ist. Erforderlich ist lediglich, zu jeder Zeit die Relativpositionen der Anregungs-PSF, der Detektions-PSF und der Probe zueinander bekannt sind.

Die zweite Maske 25 kann hier so gestaltet sein, wie mit Bezug auf Fig. 5 beschrieben. Dadurch wird kaum Probenlicht 53 von der zweiten Maske 25 blockiert.

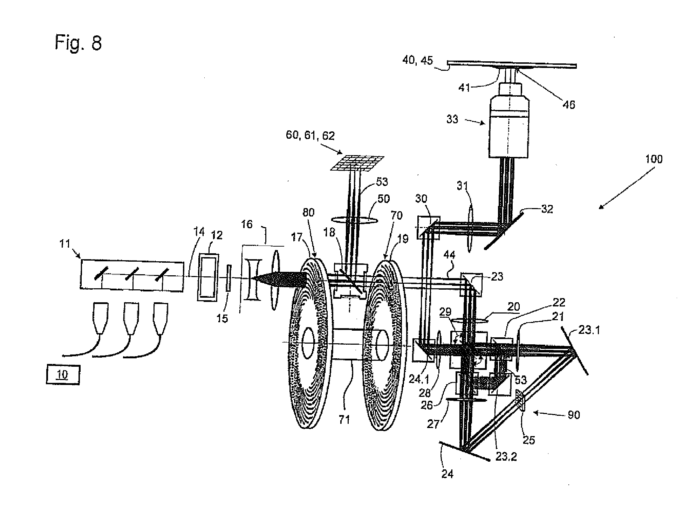

Die zweite Maske 25 kann aber auch so gestaltet sein, dass sie Beleuchtungs- und Probenlicht gleichermaßen beeinflusst. In diesem Fall läuft das Probenlicht 53 vorzugsweise nicht über die zweite Maske 25. Eine solche Ausführungsform eines erfindungsgemäßen Lichtmikroskops 100 ist schematisch in Fig. 8 dargestellt. Gegenüber Fig. 7 ist hier ein erster Farbteifer 22 zwischen der ersten Spiegelfläche der zweiten Scanmittel 29 und der zweiten Maske 25 hinzugefügt und es ist ein zweiter Farbteiler 26 zwischen der zweiten Maske 25 und der zweiten Spiegelfläche der zweiten Scanmittel 29 ergänzt. Dadurch wird Probenlicht 53 über einen separaten Strahlengang mit einem Spiegel 23.2 geleitet und trifft nicht auf die zweite Maske 25.

In den Ausführungsbeispielen der Figuren sind die erste Maske und die ersten Scanmittel zwar stets durch eine rotierende Lochblendenscheibe gebildet. Für eine Scanbewegung kann die Lochblendenscheibe aber auch geradlinig verschiebbar sein. Zudem kann an Stelle der Lochblendenscheibe eine andere Maske verwendet werden. Bei dieser können die Weiterleitungsbereiche beispielsweise durch Spiegelflächen oder auch durch lichtbrechende Bereiche gebildet sein. Insbesondere kann ein Mikrospiegelarray eingesetzt werden. Weiterhin kann die erste Maske auch feststehend sein. In diesem Fall sind die ersten Scanmittel dazu gestaltet, Beleuchtungslichtstrahlen und Probenlicht zwischen der ersten Maske und der Probenebene variabel abzulenken, beispielsweise über einen drehbaren Spiegel.

Ebenso kann auch die zweite Maske 25 anders ausgeführt sein als zu Fig. 5 beschrieben. Insbesondere kann die zweite Maske ebenfalls in einer Weise gestaltet sein, wie mit Bezug auf die erste Maske beschrieben. Dabei können die beiden Masken und ihre Scanmittel einen gleichen Aufbau oder voneinander verschiedene Aufbauten haben.

Ein beispielhafter Ablauf zur Erzeugung eines Bildes hoher Auflösung mit dem Lichtmikroskop 100 wird im Folgenden beschrieben.

Beleuchtungslicht wird durchgängig über die Lochblendenscheibe 19 und die zweite Maske 25 auf die Probe 41 geleitet. Die zweiten Scanmittel 29 führen zunächst keine Scanbewegung aus. Die Lochblendenscheibe 19 wird hingegen durchgängig rotiert. Durch diese Drehung werden die von der Lochblendenscheibe 19 ausgehenden Beleuchtungslichtstrahlen 44 zunächst über bestimmte Weiterleitungsbereiche der zweiten Maske 25 zur Probe 41 geleitet und zu einem späteren Zeitpunkt über andere Weiterleitungsbereiche der zweiten Maske 25 zur Probe 41 geleitet. Weil die zweite Maske 25 dabei ruht, sind auch die in dieser Weise erzeugten Beleuchtungsspots auf der Probe 41 ortsfest.

Jedes Detektorelement 61 der Kamera 60 kann daher während diesem Ablauf durchgängig empfangende Signale integrieren. Diese Integration wird erst beendet, wenn die Beleuchtungslichtstrahlen von der Lochblendenscheibe 19 jeweils über mehrere Weiterleitungsbereiche der zweiten Maske 25 zur Probe 41 geführt wurden.

Sodann werden die empfangenen Signale der Detektorelemente 61 ausgelesen. Während dieser Zeit werden die zweiten Scanmittel 29 verstellt. Eine Schrittweite dieser Verstellung ist so klein, dass die erzeugten Beleuchtungsspots in der Probenebene 40 um weniger als 1 Airy verschoben werden, vorzugsweise weniger als 0,5 Airy. Daraufhin werden die zweiten Scanmittel 29 wieder ortsfest gehalten und eine weitere Bildaufnahme wird in der zuvor beschriebenen Weise durchgeführt.

In dieser Weise werden mehrere Bildern aufgenommen. Die Anzahl der aufgenommenen Bilder kann festgelegt werden durch den Beleuchtungsspotabstand und die Scanschrittweite. Der Beleuchtungsspotabstand ist hier der Abstand zwischen zwei nacheinander erzeugbaren Beleuchtungsspots in der Probenebene, welche von benachbarten Weiterleitungsbereichen der zweiten Maske erzeugt werden können. Die Scanschrittweite gibt hier an, um welche Strecke in der Probenebene ein bestimmter Beleuchtungsspot durch die zweiten Scanmittel zwischen zwei Bildaufnahmen verschoben wird. Die Anzahl an aufzunehmenden Bildern kann dann festgelegt sein als das Quadrat des Quotienten aus dem Beleuchtungsspotabstand geteilt durch die Scanschrittweite. Durch das Quadrat wird das Scannen in zwei Dimensionen berücksichtigt.

Anschließend werden die Bilder zu einem Bild hoher Auflösung verrechnet. Dabei wird die Umsortierung der aufgenommenen Signale berücksichtigt, wie eingangs zum Stand der Technik erläutert.

Die Notwendigkeit des Umsortierens der empfangenen Signale kann vermieden werden, wenn eine zusätzliche Scanbewegung durchführbar ist. Die zusätzliche Scanbewegung ist eine Relativbewegung zwischen dem Probenlicht und der Detektionseinrichtung und wird gleichzeitig und abhängig von der zweiten Scanbewegung der zweiten Scanmittel durchgeführt. Beispielsweise kann die Detektionseinrichtung verschoben werden oder es kann ein Scanspiegel vor der Detektionseinrichtung vorhanden sein. Hierbei ist wichtig, dass die zusätzliche Scanbewegung des Probenlichts über die Detektionseinrichtung in ihrer Richtung entgegengesetzt und bevorzugt betragsgleich ist zur Scanbewegung, mit der die zweiten Scanmittel beschnittene Beleuchtungslichtstrahlen über die Probenebene führen.

Durch die beschriebenen Merkmale des erfindungsgemäßen Lichtmikroskops ist die Anzahl aufzunehmender Bilder verhältnismäßig gering, womit eine Zeitersparnis einhergeht. Durch die Abmessungen der Weiterleitungsbereiche der zweiten Maske sind außerdem die Beleuchtungsspots in der Probenebene sehr klein. Gleichzeitig kann vermieden werden, dass Anteile des nachzuweisenden Probenlichts durch die zweite Maske 25 unnötig blockiert werden. Indem verhältnismäßig viel Beleuchtungslicht in die Probenebene geleitet werden kann und verhältnismäßig viel Probenlicht zu der Detektionseinrichtung gelangt, kann in kurzer Zeit ein Bild mit gutem Signal-zu-Rausch-Verhältnis aufgenommen werden.

### Bezugszeichenliste

- 10: Lichtquelle
- 11: Spiegeltreppe mit teildurchlässigen Spiegeln oder Farbteilern
- 12: Akusto-optischer durchstimmbarer Filter (AOTF)
- 14: Beleuchtungslicht
- 15: Lambda/4-Platte
- 16: Teleskop zur Strahlaufweitung
- 17: Mikrolinsenscheibe
- 18, 22, 26: Farbteiler oder Strahlteiler
- 19: erste Maske oder Lochblendenscheibe
- 19.1: Weiterleitungsbereich oder Pinhole der ersten Maske 19
- 23, 24: Spiegel
- 23.1, 23.2, 24.1: Spiegel
- 20, 21, 27, 28, 31: Optik
- 29: zweite Scanmittel
- 25: zweite Maske oder Sub-Airy-Lochmaske
- 25.1: Weiterleitungsbereich oder Sub-Airy-Loch der zweiten Maske 25
- 25.2: Dichroitisches Schichtsystem
- 32: Spiegel
- 33: Objektiv
- 40: Probenebene
- 41: Probe
- 44: Beleuchtungslichtstrahlen
- 44.1: Beleuchtungsspot vor der zweiten Maske
- 45: Probenhalterung, insbesondere mit Probe-Verschiebeeinheit
- 46: Beleuchtungslichtstrahlen, die von der zweiten Maske beschnitten wurden
- 46.1: Beleuchtungsspot in der Probenebene, der durch einen beschnittenen Beleuchtungslichtstrahl 46 hervorgerufen wird
- 50: Optik
- 53: Probenlicht
- 53.1: Probenlichtspot
- 60: Detektionseinrichtung, z.B. Kamera mit 2D-Chip, insbesondere mit mehreren Sub-Airy-Detektorelementen
- 61: Detektorelement oder -pixel
- 62: Detektions- oder Bildebene
- 70, 90: Zwischenbildebene
- 71: erste Scanmittel
- 91: PSF des Beleuchtungslichts
- 92: Intensitätsverlauf eines Beleuchtungsspots bei einem Weiterleitungsbereich der zweiten Maske mit einem Durchmesser von 0,4 Airy
- 93: Intensitätsverlauf eines Beleuchtungsspots bei einem Weiterleitungsbereich der zweiten Maske mit einem Durchmesser von 1,0 Airy
- 94: PSF des Probenlichts
- 95: Intensitätsverlauf eines Probenlichtspots auf der Detektionseinrichtung
- 96: Intensitätsverlauf eines Probenlichtspots auf der Detektionseinrichtung, bei Verwendung von Optiken mit anderer numerischer Apertur als beim Intensitätsverlauf 95
- 100: Lichtmikroskop

## Patentansprüche

1. Lichtmikroskop
mit einer ersten Maske (19), welche voneinander getrennte Weiterleitungsbereiche (19.1) aufweist zum gleichzeitigen Erzeugen mehrerer Beleuchtungslichtstrahlen (44) aus Beleuchtungslicht (14),
mit ersten Scanmitteln (71) zum Erzeugen einer Scanbewegung der Beleuchtungslichtstrahlen (44) und
mit einer Probenhalterung (45) zum Halten einer Probe (41),
**dadurch gekennzeichnet,**
**dass** eine zweite Maske (25) mit voneinander getrennten Weiterleitungsbereichen (25.1) vorhanden ist, welche zum Beschneiden der Beleuchtungslichtstrahlen (44) kleiner sind als die Weiterleitungsbereiche (19.1) der ersten Maske (19),
**dass** durch die Scanbewegung der ersten Scanmittel (71) jeder der Beleuchtungslichtstrahlen (44) nacheinander auf verschiedene Weiterleitungsbereiche (25.1) der zweiten Maske (25) leitbar ist und
**dass** zweite Scanmittel (29) vorhanden sind zum Erzeugen einer Scanbewegung zwischen den beschnittenen Beleuchtungslichtstrahlen (46) und der Probenhalterung (45).

2. Lichtmikroskop nach Anspruch 1,
**dadurch gekennzeichnet,**
**dass** die erste Maske (19) eine erste Lochblendenscheibe (19) aufweist, bei welcher die Weiterleitungsbereiche (19.1) durch Löcher (19.1) gebildet sind, und
**dass** die ersten Scanmittel (71) Stellmittel zur Positionsänderung der Lochblendenscheibe (19) aufweisen.

3. Lichtmikroskop nach Anspruch 1 oder 2,
**dadurch gekennzeichnet,**
**dass** jeder der Weiterleitungsbereiche (19.1) der ersten Maske (19) mindestens so groß ist wie eine Airy-Scheibe und
**dass** jeder der Weiterleitungsbereiche (25.1) der zweiten Maske (25) kleiner ist als eine Airy-Scheibe.

4. Lichtmikroskop nach einem der Ansprüche 1 bis 3,
**dadurch gekennzeichnet,**
**dass** ein Abstand benachbarter Weiterleitungsbereiche (25.1) der zweiten Maske (25) kleiner ist als ein Abstand benachbarter Weiterleitungsbereiche (19.1) der ersten Maske (19).

5. Lichtmikroskop nach einem der Ansprüche 1 bis 4,
**dadurch gekennzeichnet,**
**dass** Probenlicht (53) zu der ersten Maske (19) leitbar ist, ohne dabei von der zweiten Maske (25) beschnitten zu werden.

6. Lichtmikroskop nach Anspruch 5,
**dadurch gekennzeichnet,**
**dass** die zweite Maske (25) außerhalb ihrer Weiterleitungsbereiche (25.1) wellenlängenabhängig entweder Licht blockiert oder Licht zwischen der ersten Maske (19) und der Probenebene (40) weiterleitet, um auftreffende Beleuchtungslichtstrahlen (44) zu beschneiden und auftreffendes Probenlicht (53) unbeschnitten in Richtung der ersten Maske (19) weiterzuleiten.

7. Lichtmikroskop nach Anspruch 5 oder 6,
**dadurch gekennzeichnet,**
**dass** ein erster Farbteiler (22) und ein zweiter Farbteiler (26) vorhanden und so angeordnet sind,
- **dass** sie Beleuchtungslichtstrahlen (44) vom ersten Farbteiler (22) zum zweiten Farbteifer (26) über die zweite Maske (25) leiten und
- **dass** sie Probenlicht (53) vom zweiten Farbteiler (26) zum ersten Farbteiler (22) nicht über die zweite Maske (25) leiten.

8. Lichtmikroskop nach einem der Ansprüche 1 bis 7,
**dadurch gekennzeichnet,**
**dass** die zweiten Scanmittel (29) dazu gestaltet sind, eine Position der zweiten Maske (25) zu ändern oder Licht zwischen der zweiten Maske (25) und der Probenebene (40) veränderbar abzulenken.

9. Lichtmikroskop nach einem der Ansprüche 1 bis 8,
**dadurch gekennzeichnet,**
**dass** die zweiten Scanmittel (29) so gestaltet sind, dass sie einerseits Licht (44, 53) zwischen der ersten und der zweiten Maske (19, 25) einstellbar ablenken und dass sie andererseits auch Licht (44, 53) zwischen der zweiten Maske (25) und der Probenebene (40) einstellbar ablenken.

10. Lichtmikroskop nach einem der Ansprüche 1 bis 9,
**dadurch gekennzeichnet,**
**dass** eine Halterung zum lösbaren Halten der zweiten Maske (25) vorhanden ist.

11. Verfahren zum Untersuchen einer mikroskopischen Probe (41),
bei dem Beleuchtungslicht (14) ausgesendet wird,
bei dem voneinander getrennte Weiterleitungsbereiche (19.1) einer ersten Maske (19) aus dem Beleuchtungslicht (14) gleichzeitig mehrere Beleuchtungslichtstrahlen (44) erzeugen und
bei dem erste Scanmittel (71) eine Scanbewegung der Beleuchtungslichtstrahlen (44) erzeugen,
**dadurch gekennzeichnet,**
**dass** mit Weiterleitungsbereichen (25.1) einer zweiten Maske (25) die Beleuchtungslichtstrahlen (44) beschnitten werden, wozu die Weiterleitungsbereiche (25.1) der zweiten Maske (25) kleiner sind als die Weiterleitungsbereiche (19.1) der ersten Maske (19),
**dass** durch die Scanbewegung der ersten Scanmittel (71) jeder der Beleuchtungslichtstrahlen (44) nacheinander auf verschiedene Weiterleitungsbereiche (25.1) der zweiten Maske (25) geleitet wird und
**dass** mit zweiten Scanmitteln (29) eine Scanbewegung zwischen den beschnittenen Beleuchtungslichtstrahlen (46) und der Probe (41) erzeugt wird.

12. Verfahren nach Anspruch 11,
**dadurch gekennzeichnet,**
**dass** eine Kameraeinrichtung (60) Probenlicht (53) aufnimmt, welches von der Probe (41) kommt,
**dass** die Kameraeinrichtung (60) empfangene Signale integriert, während Beleuchtungslicht (14) durchgängig auf die erste Maske (19) gestrahlt wird und die ersten Scanmittel (71) eine Scanbewegung der Beleuchtungslichtstrahlen (44) erzeugen.

13. Verfahren nach Anspruch 12,
**dadurch gekennzeichnet,**
**dass** ein Integrieren der empfangenen Signale der Kameraeinrichtung (60) erst dann beendet wird und das in dieser Weise aufgenommene Bild ausgelesen wird, wenn jeder der Beleuchtungslichtstrahlen (44) nacheinander auf mehrere Weiterleitungsbereiche (25.1) der zweiten Maske (25) geleitet worden ist.

14. Verfahren nach Anspruch 12 oder 13,
**dadurch gekennzeichnet,**
**dass** eine Scanbewegung der zweiten Scanmittel (29) zwischen Integrationszeiten der Kameraeinrichtung (60) erfolgt, nicht aber während die beschnittenen Beleuchtungslichtstrahlen (46) auf die Probe (41) geleitet werden und die Kameraeinrichtung (60) empfangene Signale integriert, oder
**dass** die Scanbewegung der zweiten Scanmittel (29) während einer Integrationszeit der Kameraeinrichtung (60) so langsam erfolgt, dass während der Integrationszeit die beschnittenen Beleuchtungslichtstrahlen (46) in der Probenebene (40) um eine Strecke verschoben werden, die kleiner ist als 1 Airy.

15. Verfahren nach einem der Ansprüche 12 bis 14,
**dadurch gekennzeichnet,**
**dass** die zweiten Scanmitteln (29) zwischen zwei Bildaufnahme der Kameraeinrichtung (60) eine Scanbewegung ausführen, mit welcher die beschnittenen Beleuchtungslichtstrahlen (46) in der Probenebene (40) um eine Strecke verschoben werden, die kleiner ist als 1 Airy.
